# EUROPEAN PATENT APPLICATION

(11) **EP 3 144 873 A1**
(43) Date of publication of application: **22.03.2017**
(21) Application number: 15792445.7
(22) Date of filing: 25.02.2015
(51) Int. Cl.: G06Q 50/10, H04N 5/225, H04N 5/232

(54) **INFORMATION-PROCESSING SYSTEM, STORAGE MEDIUM, AND CONTENT ACQUISITION METHOD**

(30) Priority: 16.05.2014 JP 2014102189
(71) Applicant: Sony Corporation, Tokyo 108-0075 (JP)
(72) Inventor: TAKEHARA, Mitsuru, Tokyo 108-0075 (JP); YAJIMA, Masakazu, Tokyo 108-0075 (JP); SAKODA, Kazuyuki, Tokyo 108-0075 (JP); NAKAMURA, Takatoshi, Tokyo 108-0075 (JP); KAMADA, Yasunori, Tokyo 108-0075 (JP); TANGE, Akira, Tokyo 108-0075 (JP)
(74) Representative: MFG Patentanwälte Meyer-Wildhagen Meggle-Freund Gerhard PartG mbB
(86) International application number: PCT/JP2015/055402
(87) International publication number: WO 2015/174118

(57) **Abstract**

An information processing system includes: a providing unit configured to provide a user with a task for acquiring content related to a specific keyword; an acquisition unit configured to acquire the content acquired by the user according to the task; and a control unit configured to carry out control that notifies the user of use of the acquired content for generating an intelligent information processing unit capable of specifying the relationship between the keyword and the content. The information processing system is capable of collecting learning data by causing an alternate job to be carried out.

## Description

### Technical Field

The present disclosure relates to information processing systems, storage mediums, and content acquisition methods.

### Background Art

In the past, machine learning has to be carried out by collecting many teacher data pieces so as to enhance recognition accuracy of a recognition engine or the like.

With regard to such a recognition engine, for example, Patent Literature 1 listed below discloses a system that learns face detection (facial recognition) from a captured image and evaluates facial expressions.

### Citation List

### Patent Literature

Patent Literature 1: JP 2008-42319A

### Summary of Invention

### Technical Problem

However, it is not easy to enhance the accuracy because a lot of manpower and money are necessary for collecting many teacher data pieces that are needed to enhance the accuracy of the recognition engine or the like.

Therefore, the present disclosure proposes an information processing system, a storage medium, and a content acquisition method that are capable of collecting learning data by causing an alternate job to be carried out.

### Solution to Problem

According to the present disclosure, there is provided an information processing system including: a providing unit configured to provide a user with a task for acquiring content related to a specific keyword; an acquisition unit configured to acquire the content acquired by the user according to the task; and a control unit configured to carry out control that notifies the user of use of the acquired content for generating an intelligent information processing unit capable of specifying the relationship between the keyword and the content.

According to the present disclosure, there is provided a storage medium having a program stored therein, the program causing a computer to function as: a providing unit configured to provide a user with a task for acquiring content related to a specific keyword; an acquisition unit configured to acquire the content acquired by the user according to the task; and a control unit configured to carry out control that notifies the user of use of the acquired content for generating an intelligent information processing unit capable of specifying the relationship between the keyword and the content.

According to the present disclosure, there is provided a content acquisition method including: providing, via a client, a user with a task for acquiring content related to a specific keyword; acquiring, via the client, the content acquired by the user according to the task; and carrying out control that notifies, via the client, the user of use of the acquired content for generating an intelligent information processing unit capable of specifying the relationship between the keyword and the content.

As described above, according to the present disclosure, it is possible to collect learning data by causing the alternate job to be carried out.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrating an overview of an information processing system according to an embodiment of the present disclosure.
[FIG. 2] FIG. 2 is a block diagram illustrating an example of internal configurations of a data collecting server and a recognition server that are included in an information processing system according to the embodiment.
[FIG. 3] FIG. 3 is a sequence diagram illustrating an operation process in an information processing system according to the embodiment.
[FIG. 4] FIG. 4 is a diagram illustrating examples of a task for acquiring photographic content related to a specific keyword, as a mission in a game.
[FIG. 5] FIG. 5 is a diagram illustrating an example of a task for selecting photographic content related to a specific keyword, as a mission in a game.
[FIG. 6] FIG. 6 is a diagram illustrating an example of a task for acquiring keywords related to a specific keyword.
[FIG. 7] FIG. 7 is a block diagram illustrating an example of a hardware configuration of an information processing device capable of achieving both a data collecting server and a recognition server according to the embodiment.

### Description of Embodiment(s)

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that the description is given in the following order.
1. Overview of information processing system according to embodiment of present disclosure
2. Basic configuration and operation process
   2-1. Basic configuration
   2-1-1. Data collecting server
   2-1-2. Recognition server
   2-2. Operation process
3. Task example
   3-1. First task example
   3-2. Second task example
4. Supplement
   4-1. Relationship level determination engine
   4-2. Behavior prediction engine
   4-3. Hardware configuration
5. Conclusion

### «1. Overview of information processing system according to embodiment of present disclosure»

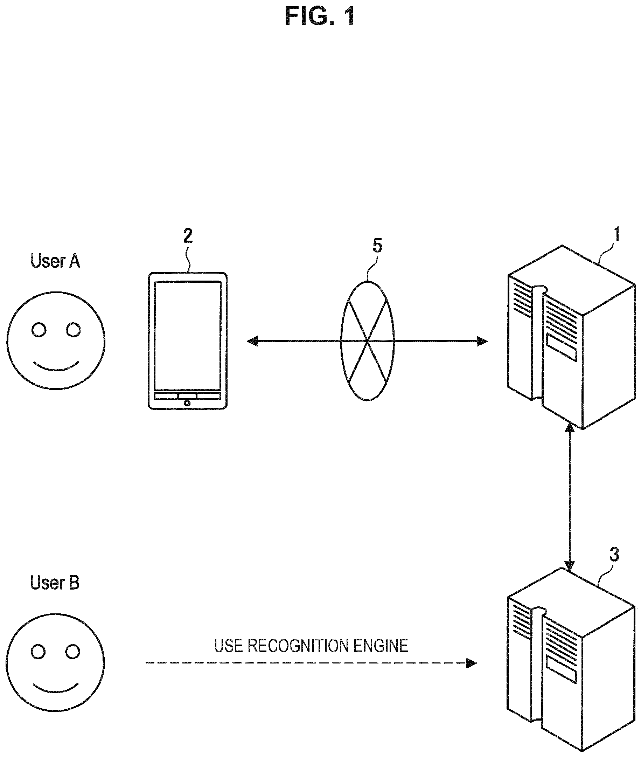

First, with reference to FIG. 1, an overview of an information processing system according to an embodiment of the present disclosure will be described. As illustrated in FIG. 1, the information processing system according to the embodiment includes a data collecting server 1 and a recognition server 3. The data collecting server 1 provides a client 2 with an alternate job (hereinafter, also referred to as a "task" in this specification) to acquire data (content) necessary for learning. The recognition server 3 enhances recognition accuracy by carrying out machine learning using the data (hereinafter, also referred to as the "content" in this specification) acquired in the alternate job.

The data collecting server 1 provides the client 2 used by a user A with the task for collecting the data necessary for machine learning that is carried out by the recognition server 3 to enhance the accuracy. The task for collecting data is provided as a mission or a minigame in a game, for example. This enables a user to enjoy doing the content collecting job. The client 2 is a user terminal such as a smartphone, a tablet terminal, or a laptop personal computer (PC). The data collecting server 1 connects to the client 2 directly or via a network 5, and provides the task.

The data collecting server 1 transmits, to the recognition server 3, content acquired by the client 2 doing the task. In addition, the data collecting server 1 pays a reward to the user A according to the content. Specifically, for example, the data collecting server 1 pays the reward according to a contribution level to learning based on the content transmitted to the recognition server 3.

The recognition server 3 is an information processing device having a function of creating various recognition engines from the machine learning. The various recognition engines include a recognition engine that recognizes a predetermined object from a captured image, a recognition engine that recognizes letters from an image, a recognition engine that recognizes specific sound from audio data, and the like, for example. The recognition server 3 returns evaluation of the learning based on the content provided by the data collecting server 1, to the data collecting server 1 as the contribution level to learning based on the content.

The recognition engine function of the recognition server 3 may be used via Application Programming Interface (API) by (the user A or) a user B who is different from the user A provided the content.

As described above, in the information processing system according to the embodiment, the data collecting server 1 provides the client 2 with the alternate job, and thereby the content used in the machine learning for enhancing the accuracy of the recognition engine in the recognition server 3 can be acquired.

In addition, according to the embodiment, learning data necessary for the machine learning is collected by providing another gamified job (alternate job) or the like and causing a user to do the alternate job, rather than collected directly. Thereby, it is possible to acquire a lot of learning data while entertaining many users. In addition, it is possible to motivate users to do alternate jobs by paying rewards to users according to acquired content.

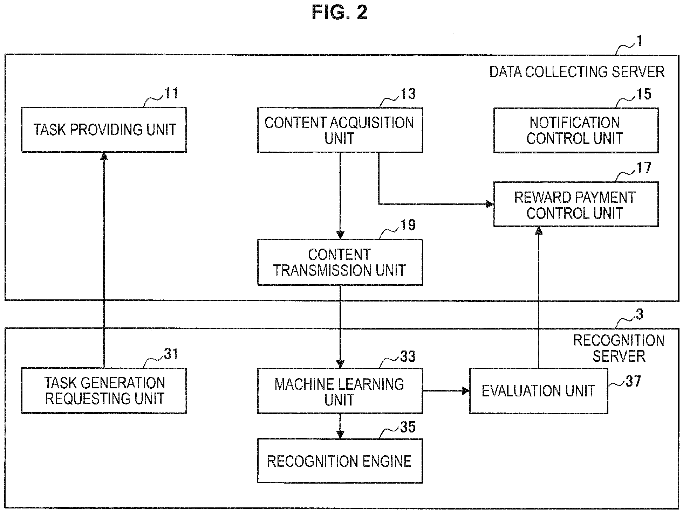

The overview of the information processing system according to an embodiment of the present disclosure has been described. Next, with reference to FIG. 2 to FIG. 3, a basic configuration and an operation process according to the embodiment will be described in this order.

### «2. Basic configuration and operation process»

### <2-1. Basic configuration>

FIG. 2 is a block diagram illustrating an example of internal configurations of the data collecting server 1 and the recognition server 3 that are included in the information processing system according to the embodiment.

### (2-1-1. Data collecting server)

As shown in FIG. 2, the data collecting server 1 includes a task providing unit 11, a content acquisition unit 13, a notification control unit 15, a reward payment control unit 17, and a content transmission unit 19.

The task providing unit 11 has a function of generating a task and providing the client 2 with the task. The task is an alternate job instead of a job of acquiring learning data necessary for machine learning in the recognition server 3. Such a task causes a user to acquire (or select) content (or mere identifier) related to a specific keyword. For example, in the case of acquiring learning data necessary for an engine that recognizes sky images, a task that causes a user to acquire content (photograph, movie, or the like of sky) related to a keyword "sky" is generated. Such a task may be provided as a mission or a quest in a game, for example.

The content acquisition unit 13 is a reception unit having a function of acquiring content acquired by a user according to a task from the client 2. In addition, the content acquisition unit 13 outputs the acquired content to the content transmission unit 19.

The content transmission unit 19 transmits, to the recognition server 3, content output from the content acquisition unit 13. Such content is used as teacher data of machine learning in the recognition server 3.

The notification control unit 15 has a function of issuing various kinds of notification to the client 2. Specifically, for example, the notification control unit 15 issues notification that the acquired content is used for machine learning of the recognition engine (for example, the acquired content is used for generating an algorithm for recognition engine). The notification control unit 15 may issue such usage notification as a participation condition before doing the task, may include such usage notification in an application execution agreement, or may issue such usage notification as a certificate of consent when transmitting content after the client 2 has done the task. Alternatively, the notification control unit 15 may issue the notification again after transmitting the content, or may issue the notification again in credits.

The reward payment control unit 17 has a function of paying a reward to a user according to the content acquired from the client 2. The reward is not necessary in the case where the task itself is designed to entertain a user (operator) doing the task (alternate job) or in the case where it is possible to make a social contribution by doing the task. However, the reward payment may motivate the user. In the case of giving cash, points, or the like that are worth in real life as the reward, cost is necessary to collect learning data as a result. Therefore, it is preferable to give bonus points, items, coins (virtual currency), or the like in a game as the reward. In the case where the virtual currency is worth in the real life, proper cost is generated. Alternatively, in the case of providing a task (alternate job) as a mission or a quest in a network game, the reward may be a word of thanks from a character in the network game after doing the task. In this case, cost is not generated.

The reward may be changed according to quality of content (contribution level to learning), the number of pieces of content, or acquisition timing of the content. For example, the recognition server 3 calculates quality of content on the basis of evaluation of a result of learning using the content, and determines the quality of the content according to the "contribution level to learning" to be transmitted to the data collecting server 1. The reward payment control unit 17 carries out control so that a larger reward is paid as the contribution level to learning is higher, or so that a predetermined reward is paid in the case where the contribution level to learning exceeds a predetermined value.

Alternatively, the reward payment control unit 17 may carry out control so that a larger reward is paid as the amount/number of pieces of content transmitted by a user is larger.

Alternatively, the reward payment control unit 17 may carry out control so that a larger reward is paid as an early stage of creation of the recognition engine is nearer a timing when a user acquires content, a timing when the content is transmitted to the data collecting server 1 (in other words, acquisition timing in data collecting server 1), or a timing when the content is used for the machine learning in the recognition server 3 (in other words, acquisition timing in recognition server 3). This is because it is desired to quickly acquire much learning data at the early stage of creation of the recognition engine. On the other hand, at a stage where much learning data have already been collected, it is desired to acquire correct learning data with higher quality. Therefore, in this case, the reward may be paid according to the contribution level to learning, as described above.

### (2-1-2. Recognition server)

Next, with reference to FIG. 2, a configuration of the recognition server 3 will be described. As illustrated in FIG. 2, the recognition server 3 includes a task generation requesting unit 31, a machine learning unit 33, a recognition engine 35, and an evaluation unit 37.

The task generation requesting unit 31 request the data collecting server 1 to generate a task in addition to information on a target recognition engine, information specifying necessary learning data, and the like. In the example illustrated in FIG. 2, the recognition server 3 requests one data collecting server 1 to generate a task. However, the embodiment is not limited thereto. The recognition server 3 may request a plurality of data collecting servers to generate tasks. Thereby, it is possible for the plurality of data collecting servers to collect the same learning data by using various tasks.

To improve the accuracy of the recognition engine 35, the machine learning unit 33 carries out the machine learning (generation of recognition algorithm) and reflects a result of the learning in the recognition engine 35 by using learning data (teacher data) transmitted from the data collecting server 1. The learning data is content that the data collecting server 1 has acquired from the client 2 in the task (alternate job). The algorithm of the machine learning carried out by the machine learning unit 33 is not specifically limited. The machine learning is carried out on the basis of a general means of the machine learning. For example, a neural network or a genetic algorithm may be used.

For example, the recognition engine 35 is a various kind of a recognition engine (recognizer) such as the object recognition engine, the letter recognition engine, or the sound recognition engine. The recognition engine 35 is an example of an intelligent information processing unit capable of specifying a relationship between a specific keyword and content.

The evaluation unit 37 evaluates a result of learning carried out by the machine learning unit 33, and calculates the contribution level of the content used for the learning to the learning. In addition, the evaluation unit 37 transmits the calculated contribution level to the learning, to the data collecting server 1.

The contribution level to learning may be calculated according to an amount of change in a parameter (also referred to as characteristic amount vector) of the recognition engine caused by learning, for example. This is because a learning effect is generally enhanced more as the amount of change in the parameter of the recognition engine (recognition algorithm) increases. As a result, it is determined that the contribution level to learning is high at the early stage of creation of the recognition engine since the amount of change in the parameter is large.

### <2-2. Operation process>

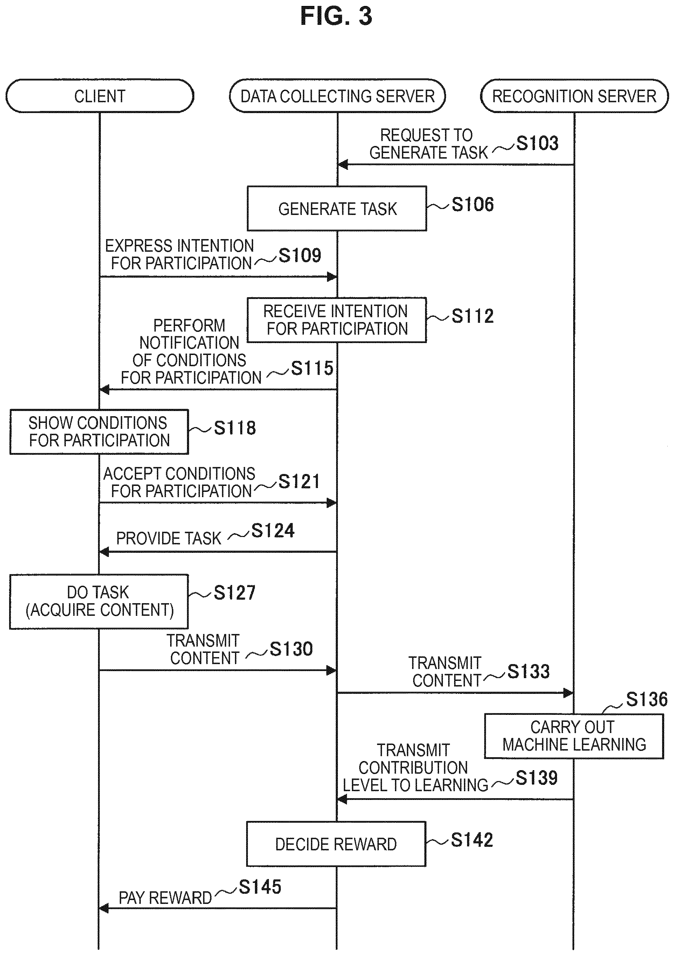

The configurations of the data collecting server 1 and the recognition server 3 that are included in the information processing system according to the embodiment have been described in detail. Next, with reference to FIG. 3, an operation process in the information processing system according to the embodiment will be described.

FIG. 3 is a sequence diagram illustrating an operation process in the information processing system according to the embodiment. As illustrated in FIG. 3, first, in Step S103, the task generation requesting unit 31 in the recognition server 3 requests the data collecting server 1 to generate a task (alternate job) of acquiring data necessary for improving the accuracy of the recognition engine.

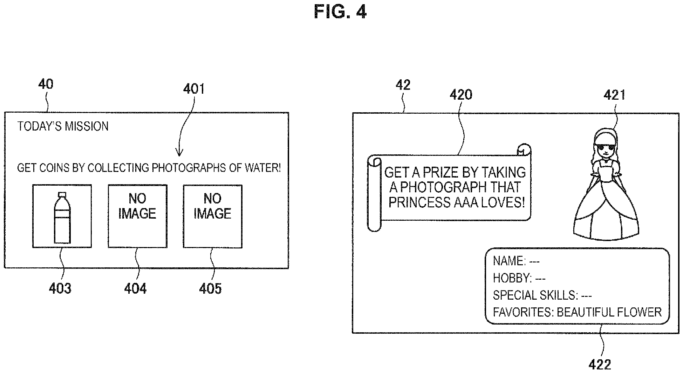

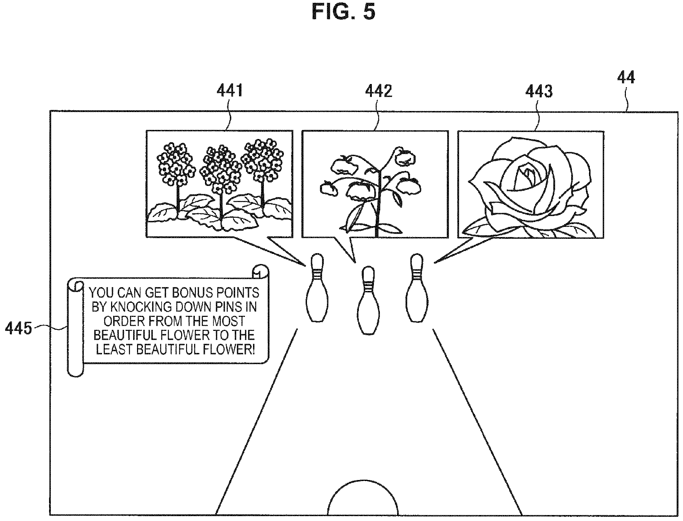

Next, in Step S106, the task providing unit 11 in the data collecting server 1 generates the task in response to the task generation request from the recognition server 3. A specific example of the task will be described later with reference to FIG. 4 and FIG. 5.

On the other hand, in Step S109, the client 2 notifies the data collecting server 1 of expression of intention to participate in this system. For example, in the case where the task generated by the data collecting server 1 is provided as a mission in a game, the client 2 automatically transmits the expression of intention to participate in this system when downloading/updating the application of the game.

Next, when the data collecting server 1 receives the intention to participate in this system from the client 2 in Step S112, the notification control unit 15 in the data collecting server 1 notifies the client 2 of conditions for the participation in subsequent Step S115. Such conditions for the participation include that content acquired by users doing tasks are used for improving the accuracy of the recognition engine, for example.

Next, in Step S118, the client 2 shows the conditions for participation. Specifically, for example, the client 2 displays the conditions for participation and an OK button in a game start screen. A user confirms the conditions for participation and taps the OK button.

Next, in Step S121, the client 2 notifies the data collecting server 1 that the conditions for participation have been accepted in the case where the user has tapped the OK button.

Next, in Step S124, the task providing unit 11 in the data collecting server 1 provides the generated task for the client 2.

Subsequently, in Step S127, the client 2 provides the task for the user, and acquires content by doing the task.

Subsequently, in Step S130, the client 2 transmits the acquired content to the data collecting server 1.

Next, in Step S313, the data collecting server 1 transmits the content acquired by the content acquisition unit 13, to the recognition server 3 via the content transmission unit 19 as the learning data.

Next, in Step S136, the machine learning unit 33 in the recognition server 3 carries out the machine learning to improve the accuracy of the recognition engine 35 by using the content transmitted as the learning data from the data collecting server 1.

Subsequently, in Step S139, the recognition server 3 returns, to the data collecting server 1, the contribution level of the content transmitted from the data collecting server 1 to learning. The contribution level has been calculated by the evaluation unit 37.

Next, in Step S142, the reward payment control unit 17 in the data collecting server 1 decides a reward according to the contribution level of the content to learning.

Subsequently, in Step S145, the reward payment control unit 17 in the data collecting server 1 pays the decided reward to the client 2.

As described above, it is possible for the information processing system according to the embodiment to collect learning data (content) from a task that is an alternate job. The learning data (content) is used for the machine learning to be carried out to improve the accuracy of the recognition engine. Specifically, for example, by providing tasks as missions in a network game, it is possible to cause many users to do the tasks as a part of the game, and this enables to collect much content. If the tasks themselves are enjoyable, it is possible to acquire much content as the learning data without paying rewards to the users.

In Steps S121 to S124 of the example in FIG. 3 described above, the data collecting server 1 provides the task after receiving the notification from the client 2 that the conditions for participation have been accepted. However, the operation process according to the embodiment is not limited thereto. For example, the data collecting server 1 may show conditions for participation in addition to providing a task to the client 2. Subsequently, the task may start in the client 2 in the case of receiving the acceptance from a user. Alternatively, the conditions for participation may be shown when content acquired by the client 2 is transmitted to the data collecting server 1 after the task is done. Subsequently, the client 2 may transmit the content to the data collecting server 1 in the case of receiving the acceptance from a user. Alternatively, simple notification that content acquired by a user doing a task is used for improving the accuracy of the recognition engine is merely shown as a caution before or after doing the task.

In addition, in Step S142 described above, the reward payment control unit 17 in the data collecting server 1 decides a reward according to the contribution level of content to learning. However, the embodiment is not limited thereto. For example, the reward payment control unit 17 may decide a reward according to the number of pieces of content, acquisition timing of the content, or the like.

### «3. Task example»

Next, with reference to FIG. 4 and FIG. 5, examples of a task provided by the task providing unit 11 of the data collecting server 1 will be described.

### <3-1. First task example>

FIG. 4 is a diagram illustrating examples of a task for acquiring photographic content related to a specific keyword, as a mission in a game. A mission screen 40 in the left side of FIG. 4 is a screen displayed on the client 2. The mission screen 40 includes a caption 401, display areas 403, 404, and 405. The caption 401 describes that a virtual currency in the game is paid as a reward by collecting photographs of water as a today's mission. The display areas 403, 404, and 405 each displays an image acquired by a user. For example, the user uses a camera function of the client 2, takes a photograph of a plastic bottle of water and the like as the photograph of water around the user, and pastes the photograph in the display area 403.

Such a mission is for acquiring images of water necessary as teacher data in the case where the recognition engine 35 in the recognition server 3 is an engine that recognizes images of water such as the plastic bottle of water. Thereby, captured images of various kinds of plastic bottles of water are collected as the teacher data, and the accuracy of the recognition engine 35 is improved by using the captured images for the machine learning of the recognition server 3.

Acquisition of content related to a specific keyword may be set as the "today's mission" in the game such as a mission of acquiring images of sky in the case of an engine that recognizes the images of sky, or such as a mission of acquiring images of flower in the case of an engine that recognizes the images of flower, for example.

A mission screen 42 in the right side of FIG. 4 includes a caption 420, a game character 421, and a profile 422 of the game character. The caption 420 describes that an item or a virtual currency in the game is paid as a reward by taking a photograph that the game character loves. Since the profile 422 says that the game character 421 loves beautiful flowers, the user takes a photograph of a flower that the user thinks is beautiful by using the camera function of the client 2, for example.

Such a mission is for acquiring images of a beautiful flower necessary as teacher data in the case where the recognition engine 35 in the recognition server 3 is an engine that recognizes images of beautiful flowers. Thereby, captured images of various kinds of beautiful flowers are collected as the teacher data, and the accuracy of the recognition engine 35 is improved by using the captured images for the machine learning in the recognition server 3. Alternatively, the caption 420 does not directly request to collect target content, but the profile 422 of the game character 421 says that the target game character loves the target content to indirectly encourage a user to acquire the target content.

### <3-2. Second task example>

In the case where a certain amount of the teacher data (content for learning) has been collected, correct teacher data with higher quality is necessary in the machine learning. Therefore, in this case, the data collecting server 1 provides a user with a task for selecting a (correct) piece of the teacher data with high quality from among pieces of the teacher data. An example of the task will be described with reference to FIG. 5.

FIG. 5 is a diagram illustrating an example of a task for selecting photographic content related to a specific keyword, as a mission in a game. As illustrated in FIG. 5, in a game screen 44, flower images 441, 442, and 443 are displayed in association with bowling pins to provide a mission of knocking down bowling pins in order from the most beautiful flower to the least beautiful flower at the time of playing the bowling game. At this time, it is possible to motivate the user without spending the cost by displaying a caption 445 describing that the user will get bonus points as a reward by knocking down the pins in order from the most beautiful flower to the least beautiful flower. As the learning data, the data collecting server 1 transmits, to the recognition server 3, information indicating the order in which the images have been knocked down in the bowling game, for example.

Such a mission is for encouraging the user to select (correct) teacher data with higher quality in the case where the recognition engine 35 in the recognition server 3 is an engine that recognizes a level of beauty of flowers, for example.

In addition to the bowling game in FIG. 5, for example, the game may be a shooter game having a mission of shooting targets corresponding to beautiful flowers.

### «4. Supplement»

The information processing system according to the embodiment has been described in detail. The above described embodiment is a mere example, and the present disclosure is not limited thereto. Next, supplement to the information processing system will be described.

### <4-1. Relationship level determination engine>

In the above embodiment, it has been described that the recognition engine 35 of the recognition server 3 in the information processing system is an example of the intelligent information processing unit capable of specifying the relationship between a specific keyword and content, and the recognition engine 35 recognizes images, sound, or the like. However, the intelligent information processing unit according to the present disclosure is not limited thereto. For example, the intelligent information processing unit may be a relationship level determination engine that determines a relationship level between a specific keyword and another keyword.

The relationship level determination engine is used in a related-keyword showing system that shows keywords predicted to be input next as candidates at a time of making a sentence, for example. In other words, the related-keyword showing system uses the relationship level determination engine to show a keyword highly related to a keyword input at a time of making a sentence, as the keyword predicted to be input next.

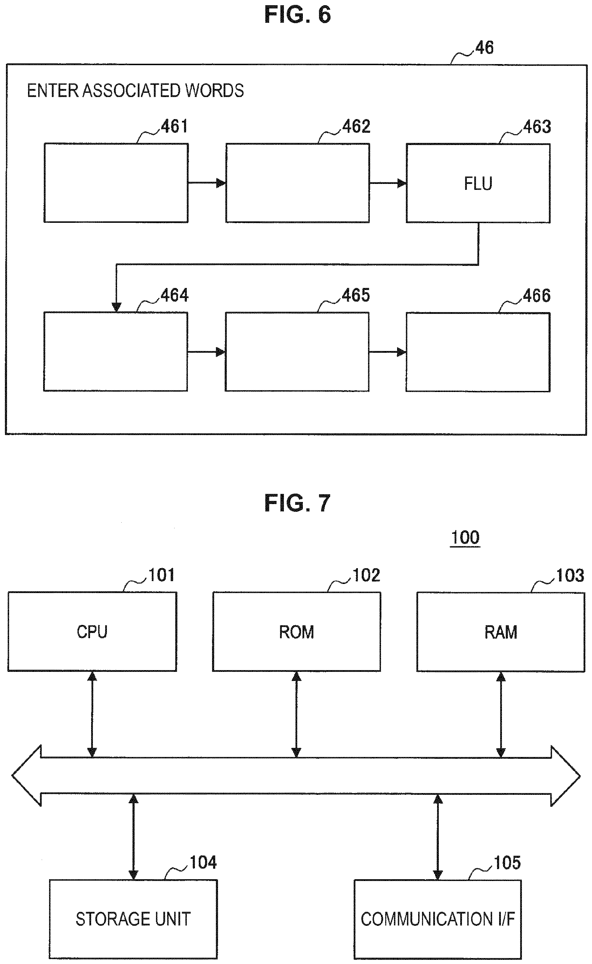

It is possible to collect the teacher data necessary for the machine learning to be carried out to improve the accuracy of such a relationship level determination engine, by providing the client 2 with a task (alternate job) generated by the task providing unit 11 in the data collecting server 1 and causing the user to do the task. An example of the task will be described with reference to FIG. 6.

FIG. 6 is a diagram illustrating an example of a task for acquiring keywords related to a specific keyword. As illustrated in FIG. 6, a task such as a word association game is provided for example. A box 436 in which a specific keyword "flu (influenza)" has already been input, and empty boxes 461, 462, and 464 to 466 are arranged to allow a user to input keywords in the empty boxes. This enables the data collecting server 1 to acquire data indicating that keywords closer to the box 463 have higher relationship levels to the specific keyword.

### <4-2. Behavior prediction engine>

In addition, examples of the intelligent information processing unit capable of specifying the relationship between a specific keyword and content also include a behavior prediction engine for security purpose. It is possible to predict criminal behavior from certain behavior patterns by specifying the relationship between a specific crime and a specific behavior pattern. This can be used for crime prevention and investigation.

It is also possible to collect the teacher data necessary for the machine learning to be carried out to improve the accuracy of such a behavior prediction engine, by providing the client 2 with a task (alternate job) generated by the task providing unit 11 in the data collecting server 1 and causing the user to do the task. For example, as a task, a user is provided with a game to illegally use a stolen credit card while trying to avoid detection. By causing the user to use the stolen credit card in a virtual space in the game, it is possible to acquire data such as a frequency of card usage, amounts of used money, places where the user has used the card, and hour of use, as teacher data of illegal use.

Examples of the behavior prediction engine include a behavior prediction engine for disaster prevention. It is possible to predict behavior patterns of people at the time of disaster by specifying the relationship between a specific disaster and a predetermined behavior pattern. This can be used for search for missing people, rescue, and evacuation guidance.

It is also possible to collect the teacher data necessary for the machine learning to be carried out to improve the accuracy of such a behavior prediction engine, by providing the client 2 with a task (alternate job) generated by the task providing unit 11 in the data collecting server 1 and causing the user to do the task. For example, as a task, a user is provided with a game using augmented reality (AR) to evacuate from a disaster while creating a realistic disaster in the game. Thereby, it is possible to acquire behavior and feelings according to attributes (age, sex, personality, and the like) of the user as teacher data of behavior at the time when the disaster has happened.

Use of user's game data for improving the accuracy of the behavior prediction engines for security purpose and disaster prevention described above is a part of the social contribution. Therefore, expression of gratitude is good enough as a reward.

### <4-3. Hardware configuration>

Next, as a supplement to the information processing system according to the embodiment, the hardware configurations of the data collecting server 1 and the recognition server 3 will be described with reference to FIG. 7. FIG. 7 is an example of a hardware configuration of an information processing device 100 capable of achieving both the data collecting server 1 and the recognition server 3.

As illustrated in FIG. 7, the information processing device 100 includes a central processing unit (CPU) 101, read only memory (ROM) 102, random access memory (RAM) 103, a storage unit 104, and communication interface (I/F) 105, for example. In the information processing device 100, the structural elements are connected via a bus serving as a data transmission channel, for example.

The CPU 101 is configured by a microcontroller, for example. The CPU 101 controls respective configurations of the information processing device 100. The CPU 101 functions as the task providing unit 11, the notification control unit 15, and the reward payment control unit 17 in the data collecting server 1. In addition, the CPU 101 functions as the task generation requesting unit 31, the machine learning unit 33, the recognition engine 35, and the evaluation unit 37 in the recognition server 3.

The ROM 102 stores programs used by the CPU 101, control data such as operation parameters, and the like. The RAM 103 temporarily stores programs and the like executed by the CPU 101, for example.

The storage unit 104 stores various kinds of data. For example, the storage unit 104 serves as a characteristic amount database used by the recognition engine 35 in the recognition server 3.

The communication I/F 105 is a communication means included in the information processing device 100, and communicates with an external device via a network (or directly). The external device constitutes the information processing system according to the embodiment. For example, the communication I/F 105 in the data collecting server 1 transmits/receives data to/from the client 2 via the network 5, and transmits/receives data to/from the recognition server 3 directly or via the network 5.

Specifically, the communication I/F 105 in the data collecting server 1 functions as the task providing unit 11, the content acquisition unit 13, the content transmission unit 19, and the like.

The example of the hardware configuration of the information processing device 100 according to the embodiment has been described.

### «5. Conclusion»

As described above, in the information processing system according to the embodiment of the present disclosure, the data collecting server 1 provides the client 2 with the alternate job (task), and thereby the content used in the machine learning for enhancing the accuracy of the recognition engine in the recognition server 3 can be acquired.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, it is also possible to create a computer program for causing hardware such as CPU, ROM, and RAM, which are embedded in each of the data collecting server 1 and the recognition server 3, to execute the functions of the data collecting server 1 and the recognition server 3. Moreover, it may be possible to provide a computer-readable recording medium having the computer program stored therein.

The configuration of each of the servers in FIG. 2 is a mere example. The structural elements of the information processing system according to the embodiment are not limited thereto. For example, the data collecting server 1 may include the machine learning unit 33, the recognition engine 35, and the evaluation unit 37 of the recognition server 3.

In addition, the client 2 may include all or a part of structural elements of the data collecting server 1.

Further, the effects described in this specification are merely illustrative or exemplified effects, and are not limitative. That is, with or in the place of the above effects, the technology according to the present disclosure may achieve other effects that are clear to those skilled in the art based on the description of this specification.

Additionally, the present technology may also be configured as below.
(1) An information processing system including:
   a providing unit configured to provide a user with a task for acquiring content related to a specific keyword;
   an acquisition unit configured to acquire the content acquired by the user according to the task; and
   a control unit configured to carry out control that notifies the user of use of the acquired content for generating an intelligent information processing unit capable of specifying the relationship between the keyword and the content.
(2) The information processing system according to (1), further including
   a reward payment control unit configured to carry out control that pays a reward to the user according to the content that has been acquired by the user and that has been acquired by the acquisition unit.
(3) The information processing system according to (2),
   wherein the reward payment control unit changes the reward according to quality of content acquired by the user.
(4) The information processing system according to (2) or (3),
   wherein the reward payment control unit changes the reward according to the number of pieces of content acquired by the user.
(5) The information processing system according to any one of (2) to (4),
   wherein the reward payment control unit changes the reward according to acquisition timing of the content.
(6) The information processing system according to any one of (1) to (5),
   wherein the providing unit provides, as a mission in a game, a task that is an alternate job instead of a job of acquiring content related to the specific keyword.
(7) The information processing system according to any one of (1) to (6), further including
   a generation unit configured to generate a recognition unit that serves as an intelligent information processing unit and that automatically recognizes the acquired content related to the keyword by learning that the content is related to the keyword.
(8) The information processing system according to any one of (1) to (7), further including
   a generation unit configured to generate a determination unit that serves as an intelligent information processing unit and that automatically determines a relationship level between the acquired content and the keyword by learning that the content is related to the keyword.
(9) A storage medium having a program stored therein, the program causing a computer to function as:
   a providing unit configured to provide a user with a task for acquiring content related to a specific keyword;
   an acquisition unit configured to acquire the content acquired by the user according to the task; and
   a control unit configured to carry out control that notifies the user of use of the acquired content for generating an intelligent information processing unit capable of specifying the relationship between the keyword and the content.
(10) A content acquisition method including:
   providing, via a client, a user with a task for acquiring content related to a specific keyword;
   acquiring, via the client, the content acquired by the user according to the task; and
   carrying out control that notifies, via the client, the user of use of the acquired content for generating an intelligent information processing unit capable of specifying the relationship between the keyword and the content.

### Reference Signs List

- 1: data collecting server
- 11: task providing unit
- 13: content acquisition unit
- 15: notification control unit
- 17: reward payment control unit
- 19: content transmission unit
- 2: client
- 3: recognition server
- 31: task generation requesting unit
- 33: machine learning unit
- 35: recognition engine
- 37: evaluation unit
- 5: network
- 100: information processing device
- 101: CPU
- 102: ROM
- 103: RAM
- 104: storage unit
- 105: communication I/F

## Claims

1. An information processing system comprising:
a providing unit configured to provide a user with a task for acquiring content related to a specific keyword;
an acquisition unit configured to acquire the content acquired by the user according to the task; and
a control unit configured to carry out control that notifies the user of use of the acquired content for generating an intelligent information processing unit capable of specifying the relationship between the keyword and the content.

2. The information processing system according to claim 1, further comprising
a reward payment control unit configured to carry out control that pays a reward to the user according to the content that has been acquired by the user and that has been acquired by the acquisition unit.

3. The information processing system according to claim 2,
wherein the reward payment control unit changes the reward according to quality of content acquired by the user.

4. The information processing system according to claim 2,
wherein the reward payment control unit changes the reward according to the number of pieces of content acquired by the user.

5. The information processing system according to claim 2,
wherein the reward payment control unit changes the reward according to acquisition timing of the content.

6. The information processing system according to claim 1,
wherein the providing unit provides, as a mission in a game, a task that is an alternate job instead of a job of acquiring content related to the specific keyword.

7. The information processing system according to claim 1, further comprising
a generation unit configured to generate a recognition unit that serves as an intelligent information processing unit and that automatically recognizes the acquired content related to the keyword by learning that the content is related to the keyword.

8. The information processing system according to claim 1, further comprising
a generation unit configured to generate a determination unit that serves as an intelligent information processing unit and that automatically determines a relationship level between the acquired content and the keyword by learning that the content is related to the keyword.

9. A storage medium having a program stored therein, the program causing a computer to function as:
a providing unit configured to provide a user with a task for acquiring content related to a specific keyword;
an acquisition unit configured to acquire the content acquired by the user according to the task; and
a control unit configured to carry out control that notifies the user of use of the acquired content for generating an intelligent information processing unit capable of specifying the relationship between the keyword and the content.

10. A content acquisition method comprising:
providing, via a client, a user with a task for acquiring content related to a specific keyword;
acquiring, via the client, the content acquired by the user according to the task; and
carrying out control that notifies, via the client, the user of use of the acquired content for generating an intelligent information processing unit capable of specifying the relationship between the keyword and the content.
